(19) Europäisches Patentamt / European Patent Office / Office européen des brevets

(11) **EP 2 318 818 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **09780383.7**

(22) Anmeldetag: **09.07.2009**

(51) Int Cl.:
*G01K 7/42* *(2006.01)*    *H02P 21/14* *(2006.01)*
*H02P 23/14* *(2006.01)*

(86) Internationale Anmeldenummer:
**PCT/EP2009/058759**

(87) Internationale Veröffentlichungsnummer:
**WO 2010/009984 (28.01.2010 Gazette 2010/04)**

(54) **VERFAHREN UND VORRICHTUNG ZUR ERMITTLUNG DER ROTORTEMPERATUR EINER PERMANENTERREGTEN SYNCHRONMASCHINE**

METHOD AND DEVICE FOR DETERMINING THE ROTOR TEMPERATURE OF A PERMANENTLY EXCITED SYNCHRONOUS MACHINE

PROCÉDÉ ET DISPOSITIF DE DÉTERMINATION DE LA TEMPÉRATURE DU ROTOR SUR UNE MACHINE SYNCHRONE À EXCITATION PERMANENTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.07.2008 DE 102008040725**

(43) Veröffentlichungstag der Anmeldung:
**11.05.2011 Patentblatt 2011/19**

(73) Patentinhaber: **Robert Bosch GmbH**
**70442 Stuttgart (DE)**

(72) Erfinder:
• **VOLLMER, Ulrich**
**73266 Bissingen (DE)**
• **BITZER, Matthias**
**70569 Stuttgart (DE)**

(56) Entgegenhaltungen:
**DE-A1- 10 254 295**

• **PEYMAN MILANFAR ET AL: "Monitoring the Thermal Condition of Permanent-Magnet Synchronous Motors" IEEE TRANSACTIONS ON AEROSPACE AND ELECTRONIC SYSTEMS, IEEE SERVICE CENTER, PISCATAWAY, NJ, US, Bd. 32, Nr. 4, 1. Oktober 1996 (1996-10-01), Seiten 1421-1429, XP011081060 ISSN: 0018-9251**

**Beschreibung**

Stand der Technik

Die Erfindung betrifft ein Verfahren zur Ermittlung der Rotortemperatur einer permanenterregten Synchronmaschine, bei dem ein erster Schätzwert für die Rotortemperatur in Abhängigkeit einer Remanenzflussdichte von in einem Rotor der Synchronmaschine enthaltenen Permanentmagneten ermittelt wird.

Die Erfindung betrifft ferner eine entsprechende Vorrichtung gemäß dem Oberbegriff von Patentanspruch 11.

Bei permanenterregten Synchronmaschinen sind die Permanentmagnete des Rotors üblicherweise die temperaturempfindlichsten Bauteile, weil eine auch nur kurzzeitige Überschreitung der Curie-Temperatur des verwendeten Magnetmaterials zur Schädigung der Magnete, insbesondere dem Verlust ihrer Magnetisierung, führt. Zum Schutz der Permanentmagnete ist daher eine Temperaturüberwachung des Rotors der Synchronmaschine zweckmäßig, so dass eine Deaktivierung der Synchronmaschine z.B. kurz vor dem Erreichen der Curie-Temperatur vorgenommen werden kann.

Die Überwachung der Rotortemperatur ist aufgrund der Rotorbewegung technisch aufwendig. Daher schlagen bekannte Verfahren anstelle einer direkten Temperaturmessung im Rotor vor, die Rotortemperatur aus den einfacher erfassbaren elektrischen Betriebsgrößen der Synchronmaschine zu ermitteln.

Ein derartiges Verfahren ist aus der DE 102 54 295 A1 bekannt und nutzt den Effekt aus, dass die Remanenzflussdichte der Permanentmagnete des Rotors von deren Temperatur bzw. der Rotortemperatur abhängt. Infolgedessen ist auch die Amplitude der Polradspannung der Synchronmaschine abhängig von der Rotortemperatur. Das bekannte Verfahren hat den Nachteil, dass die Ermittlung der Rotortemperatur auf der Basis eines linearen Modells erfolgt, das aufgrund u.a. magnetischer Sättigungseffekte nur in einem eingeschränkten Betriebsbereich der Synchronmaschine gültig ist und für viele Anwendungen eine unzureichende Präzision bietet.

Aus Peyman Milanfar et. al.: "Monitoring the thermal condition of permanent-magnet synchronous motors" IEEE Transactions on aerospace and electronic systems, Bd.32, Nr.4, 1. Oktober 1996, Seiten 1421-1429 ist ein Verfahren zur Ermittlung der Rotortemperatur einer permanenterregten Synchronmaschine bekannt, bei dem ein erster Schätzwert für die Rotortemperatur in Abhängigkeit einer Remanenzflussdichte der in dem Rotor der Synchronmaschine enthaltenen Permanentmagneten und ein zweiter Schätzwert für die Rotortemperatur mittels eines ein thermisches Modell der Synchronmaschine enthaltenden Kalmanfilters ermittelt wird.

Offenbarung der Erfindung

Demgemäß ist es Aufgabe der vorliegenden Erfindung, ein Verfahren und eine Vorrichtung der eingangs genannten Art dahingehend zu verbessern, dass eine gesteigerte Präzision bei der Ermittlung der Rotortemperatur gegeben ist.

Diese Aufgabe wird bei dem Verfahren der eingangs genannten Art erfindungsgemäß dadurch gelöst, dass ein zweiter Schätzwert für die Rotortemperatur mittels eines ein thermisches Modell der Synchronmaschine enthaltenden Kalmanfilters ermittelt wird, dem zumindest zeitweise der erste Schätzwert für die Rotortemperatur zugeführt wird. D.h., erfindungsgemäß wird zusätzlich zu dem ersten Schätzwert, wie er von den herkömmlichen Verfahren bekannt ist, ein zweiter Schätzwert ermittelt. Die Verwendung des thermischen Modells der Synchronmaschine erlaubt hierbei besonders vorteilhaft eine Schätzung der Rotortemperatur basierend auf Eingangsgrößen, die messtechnisch wenig aufwendig erfassbar sind, z.B. der Statortemperatur. Durch die erfindungsgemäße Kombination des konventionellen ersten Schätzwerts mit dem das thermische Modell enthaltenden Kalmanfilter ergibt sich vorteilhaft eine gesteigerte Präzision bei der Ermittlung der Rotortemperatur.

Eine rechnerisch besonders einfache Auswertung des Kalman-Filters ergibt sich erfindungsgemäß dadurch, dass dem Kalmanfilter, insbesondere für einen Korrekturschritt, nur entweder der erste Schätzwert für die Rotortemperatur oder der Messwert für die Statortemperatur zugeführt wird. Dadurch kann nämlich bei der Ermittlung der Kalman-Verstärkung im Rahmen des Korrekturschritts des Kalman-Filters vorteilhaft auf eine Matrixinversion einer 2x2-Ausgangs- bzw. Messmatrix verzichtet werden.

Die erfindungsgemäß vorgeschlagene ausschließliche Auswertung nur einer der beiden Größen innerhalb einer Iteration des Kalmanfilters ermöglicht vorteilhaft die Verwendung einer einfacheren Ausgangsmatrix, so dass anstelle einer Matrixinversion eine Division durch eine skalare Größe möglich ist.

Dennoch bietet das erfindungsgemäße Verfahren gegenüber dem herkömmlichen Ansatz eine gesteigerte Präzision, da beispielsweise alternierend in aufeinander folgenden Iterationen der erste Schätzwert für die Rotortemperatur bzw. der Messwert für die Statortemperatur für den Korrekturschritt des Kalmanfilters verwendbar ist und somit beide Werte zur Verfeinerung des mittels des Kalmanfilters erhaltenen zweiten Schätzwerts beitragen. Die beiden Werte können anstelle einer alternierenden Verwendung beispielsweise auch in unregelmäßiger Folge verwendet werden. Es kann z.B. immer dann, wenn ein neuer erster Schätzwert für die Rotortemperatur vorliegt der erste Schätzwert für die Rotortemperatur von dem Kalmanfilter als "Messgröße" verwendet werden, und ansonsten wird der Kalmanfilter mit der messtechnisch erfassten Statortemperatur als Messgröße ausgewertet.

Sowohl der erste Schätzwert für die Rotortemperatur als auch ein Messwert für die Statortemperatur können erfindungsgemäß vorteilhaft dem Kalmanfilter, insbesondere für den Korrekturschritt, zugeführt werden, wobei insbesondere auch der erste Schätzwert für die Rotortemperatur im Sinne einer Messgröße verwendet wird, um mittels der neu berechneten Kaiman-Verstärkung auf einen neuen zweiten Schätzwert zu führen.

Bei einer vorteilhaften Ausführungsform der Erfindungsvariante ist zur präzisen Ermittlung des zweiten Schätzwerts vorteilhaft vorgesehen, dass das thermische Modell der Synchronmaschine mindestens die Komponenten Stator, Rotor und Kühlwasser aufweist, wobei Wärmeübergänge vorzugsweise zwischen allen Komponenten berücksichtigt werden.

Erfindungsgemäß ist es zur Steigerung der Präzision ferner möglich, von einer Drehzahl der Synchronmaschine abhängige Wärmeleitwerte zwischen den Komponenten des thermischen Modells zu verwenden.

Als eine weitere Lösung der Aufgabe der vorliegenden Erfindung ist eine Vorrichtung gemäß Patentanspruch 10 angegeben. Die Funktionalität der erfindungsgemäßen Vorrichtung kann vorteilhaft integriert sein in ein herkömmliches Steuergerät für eine Synchronmaschine, wobei die erfindungsgemäßen Verfahrensschritte z.B. von einer Recheneinheit des Steuergeräts durchführbar sind.

Vorteilhafte Ausgestaltungen der Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:

Figur 1    schematisch ein Funktionsdiagramm einer Ausführungsform des erfindungsgemäßen Verfahrens, und

Figur 2    die zeitliche Abfolge einzelner Schritte des erfindungsgemäßen Verfahrens.

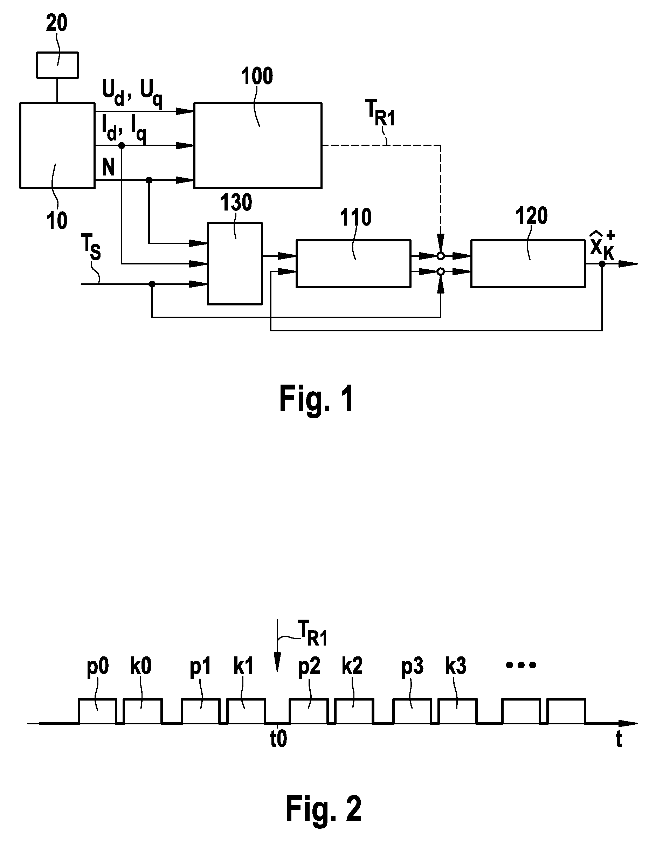

Figur 1 zeigt schematisch eine permanenterregte Synchronmaschine 10, die durch ein ihr zugeordnetes Steuergerät 20 gesteuert wird. Die elektrischen Betriebsgrößen $U_d$, $U_q$, $I_d$, $I_q$ sowie die Drehzahl N der Synchronmaschine 10 werden einem ersten Schätzwertbildner 100 zugeführt, der hieraus einen ersten Schätzwert $T_{R1}$ für die Rotortemperatur der Synchronmaschine 10 ermittelt.

Die Betriebsgrößen $U_d$, $U_q$ entsprechen der Spannung der Synchronmaschine 10 in d-bzw. q-Richtung, und die Betriebsgrößen $I_d$, $I_q$ entsprechen dem Strom der Synchronmaschine 10 in d- bzw. q-Richtung.

Das Funktionsprinzip des Schätzwertbildners 100 basiert auf der Temperaturabhängigkeit der Remanenzflussdichte der Permanentmagnete des Rotors der Synchronmaschine 10. Da auch die Amplitude der Polradspannung der Synchronmaschine 10 abhängig ist von der Rotortemperatur, kann der Schätzwertbildner 100 den ersten Schätzwert $T_{R1}$ für die Rotortemperatur gemäß der Gleichung

$$T_{R1} = T_{R0} + \frac{K_m(T_{R1}) - K_{m0}}{\alpha \cdot K_{m0}}$$

bilden, wobei $\alpha$ der Temperaturkoeffizient der Remanenzflussdichte ist, wobei $K_{m0}$ ein Referenzwert der Remanenzflussdichte bei der Referenztemperatur $T_{R0}$ ist, und wobei gilt:

$$K_m(T_{R1}) = \frac{U_q - R \cdot I_q}{\omega} - L_d \cdot I_d.$$

Der Temperaturkoeffizient $\alpha$ und die Referenzwerte $k_{m0}$, $T_{R0}$ können beispielsweise messtechnisch unter entsprechend festgelegten Betriebsbedingungen ermittelt und für den Normalbetrieb der Synchronmaschine 10 bzw. die Ausführung des erfindungsgemäßen Verfahrens gespeichert werden.

Die temperaturabhängige Remanenzflussdichte $K_m(T_{R1}) = \dfrac{U_q - R \cdot I_q}{\omega} - L_d(I_d) \cdot I_d$ wird unter den nachstehend beschriebenen Vereinfachungen aus dem stationären Modell der Synchronmaschine 10 erhalten:

$$U_d = R \cdot I_d - L_q \cdot I_q \cdot \omega, \qquad \text{(Gleichung 1a)}$$

$$U_q = R \cdot I_q + L_d \cdot I_d \cdot \omega + K_m \cdot \omega, \qquad \text{(Gleichung 1b)}$$

wobei $U_d$, $U_q$ die Spannung der Synchronmaschine 10 in d- bzw. q-Richtung bezeichnet,
wobei $I_d$, $I_q$ den Strom der Synchronmaschine 10 in d- bzw. q-Richtung bezeichnet und $L_d$, $L_q$ die entsprechenden Induktivitäten, wobei R ein Strangwiderstand ist, wobei $\omega$ die elektrische Winkelgeschwindigkeit ist, und wobei $K_m$ die temperaturabhängige Grundwellenamplitude des Polradflusses bzw. Remanenzflussdichte ist.

Zur Vereinfachung der Auswertung des vorstehend angeführten stationären Modells der Synchronmaschine 10 werden bevorzugt die folgenden Annahmen gemacht:

a) Erfahrungsgemäß ist es ausreichend, für die temperaturabhängige Remanenzflussdichte $K_m(T_{R1})$ nur eine Abhängigkeit von dem Strom $I_q$ zu berücksichtigen.

b) Der Schätzwert $T_{R1}$ wird bevorzugt aus der Gleichung (1b) erhalten, so dass die Induktivität $L_q$ nicht ausgewertet werden muss.

c) Der Gültigkeitsbereich des Modells kann auf den Fall $I_q = 0$ eingeschränkt werden.

Insgesamt ergibt sich unter diesen Annahmen
für den ersten Schätzwert $T_{R1}$:

$$T_{R1} = T_{R0} + \frac{K_m(T_{R1}) - K_{m0}}{\alpha \cdot K_{m0}},$$

mit

$$K_m(T_{R1}) = \frac{U_q - R \cdot I_q}{\omega} - L_d \cdot I_d.$$

Im Falle der Vereinfachung $I_q = 0$ gilt schließlich:

$$K_m(T_{R1}) = \frac{U_q}{\omega} - L_d \cdot I_d.$$

Die vorstehend beschriebene Vereinfachung hat den Nachteil, dass der erste Schätzwert $T_{R1}$ nur noch unter den entsprechenden Betriebsbedingungen wie z.B. $I_q = 0$ gebildet werden kann und somit für andere Betriebssituationen nicht stets ohne weiteres neu gebildet werden kann.

Alternativ zu der vorstehend beschriebenen vereinfachten Betrachtung können die Gleichungen (1a), (1b) des stationären Modells für $U_d$, $U_q$ auch ohne vereinfachende Annahmen ausgewertet werden, wobei die Präzision des ersten Schätzwerts $T_{R1}$ entsprechend steigt, insbesondere auch ein aktueller Wert in anderen als den der Vereinfachung zugrundeliegenden Betriebssituationen erhalten werden kann.

Damit das Modell der Gleichungen (1a), (1b) auch für den Fall der magnetischen Sättigung gültig ist, kann erfindungsgemäß vorgesehen sein, dass die Induktivitäten $L_d$, $L_q$ sowie die Größe $K_m(T_{R1})$ in Abhängigkeit von den Strömen $I_d$, $I_q$ bestimmt werden, d.h. die Parameter $I_d$, $I_q$, $K_m(T_{R1})$ sind dann Funktionen von zwei Variablen, so dass sich eine echtzeitfähige Bestimmung mithilfe entsprechender Kennfelder anbietet.

Generell kann zur Ermittlung des ersten Schätzwerts $T_{R1}$ für die Rotortemperatur zusätzlich oder alternativ jedes andere Verfahren verwendet werden, das die Rotortemperatur in Abhängigkeit einer Remanenzflussdichte ermittelt.

Um eine präzisere Bestimmung der Rotortemperatur zu ermöglichen, sieht das erfindungsgemäße Verfahren zusätzlich zu der Betrachtung des ersten Schätzwerts $T_{R1}$ noch vor, dass ein zweiter Schätzwert $T_{R2}$ für die Rotortemperatur mittels eines ein thermisches Modell der Synchronmaschine 10 enthaltenden Kalmanfilters ermittelt wird, dem zumindest zeitweise der erste Schätzwert $T_{R1}$ für die Rotortemperatur zugeführt wird.

D.h., das erfindungsgemäße thermische Modell für die Rotortemperatur, das mittels des Kalmanfilters ausgewertet wird, wird weiter erfindungsgemäß um den ersten Schätzwert $T_{R1}$ erweitert, so dass eine präzisere Ermittlung der Rotortemperatur möglich ist als bei den herkömmlichen Verfahren. Insbesondere erlaubt das erfindungsgemäße thermische Modell vorteilhaft auch die Berücksichtigung der Statortemperatur der Synchronmaschine 10.

Das thermische Verhalten der Synchronmaschine 10 kann erfindungsgemäß näherungsweise durch ein thermisches Netzwerk beschrieben werden, das mindestens die Knoten "Stator", "Rotor" und "Kühlwasser" umfasst, jedoch bedarfsweise auch komplexer modelliert sein kann.

Wärmeübergänge werden vorzugsweise zwischen allen Komponenten angenommen, so dass sich für die Wärmekapazitäten $c_{p,R}$, $c_{p,S}$ die folgenden Gleichungen ergeben:

$$c_{p,R}\dot{T}_{R2} = G_{RS}(T_S - T_{R2}) + G_{RK}(T_K - T_{R2}) + PV_R \qquad \text{(Gleichung 2a)}$$

$$c_{p,S}\dot{T}_S = G_{RS}(T_{R2} - T_S) + G_{SK}(T_K - T_S) + PV_S \qquad \text{(Gleichung 2b)}$$

Die Größe $\dot{T}_{R2}$ repräsentiert hierbei die zeitliche Änderung des erfindungsgemäß betrachteten zweiten Schätzwerts $T_{R2}$ für die Rotortemperatur, und die Größe $\dot{T}_S$ repräsentiert hierbei die zeitliche Änderung der Statortemperatur $T_S$, die im Gegensatz zu der Rotortemperatur der Synchronmaschine 10 aufgrund des ruhenden Stators verhältnismäßig einfach messtechnisch erfassbar ist.

Die Größen $G_{RS}(N)$, $G_{RK}(N)$, $G_{SK}(N)$ repräsentieren die von der Drehzahl N der Synchronmaschine 10 abhängigen Wärmeleitwerte zwischen den Komponenten Rotor (Index "R"), Stator (Index "S") und Kühlwasser (Index "K"). Die Größe $G_{RS}(N)$ gibt beispielsweise den Wärmeleitwert zwischen Rotor und Stator an.

Die Temperatur $T_K$ des Kühlwassers wird als bekannt vorausgesetzt; sie ist ebenso wie die Statortemperatur $T_S$ auf einfache Weise messtechnisch erfassbar und bildet daher zusammen mit dieser eine Eingangsgröße des erfindungsgemäßen thermischen Modells. Weitere Eingangsgrößen des erfindungsgemäßen thermischen Modells sind die als Wärmequelle wirkenden Verlustleistungen $PV_S$, $PV_R$ an Stator und Rotor, die Funktionen der Ströme $I_d$, $I_q$, der Drehzahl N und der Temperaturen von Stator und Rotor sind.

Bei einer besonders bevorzugten Variante des erfindungsgemäßen Verfahrens wird zur Vereinfachung davon ausgegangen, dass die Abhängigkeit der Verlustleistungen $PV_S$, $PV_R$ von der Rotortemperatur nur schwach und daher in erster Näherung vernachlässigbar ist.

Eine zeitlich diskretisierte Zustandsdarstellung des erfindungsgemäßen thermischen Modells der Synchronmaschine 10 nach den Gleichungen (2a), (2b) mit dem Zeitindex k=0, 1, .. führt auf:

$$x_{k+1} = A_d x_k + B_d u_k \qquad \text{(Gleichung 3)}$$

mit dem Zustandsvektor

$$x_k = \begin{bmatrix} T_{R2,k} \\ T_{S,k} \end{bmatrix},$$

$$x_{k+1} = \begin{bmatrix} T_{R2,k+1} \\ T_{S,k+1} \end{bmatrix},$$

der durch das thermische Modell definierten Systemmatrix

$$A_d = \begin{bmatrix} 1 - \dfrac{\Delta t (G_{RS} + G_{RK})}{c_{p,R}} & \dfrac{\Delta t \cdot G_{RS}}{c_{p,R}} \\[3mm] \dfrac{\Delta t \cdot G_{RS}}{c_{p,S}} & 1 - \dfrac{\Delta t (G_{RS} + G_{SK})}{c_{p,S}} \end{bmatrix},$$

der Eingangsmatrix

$$B_d = \begin{bmatrix} \dfrac{\Delta t \cdot G_{RK}}{c_{p,R}} & \dfrac{1}{c_{p,R}} & 0 \\[3mm] \dfrac{\Delta t \cdot G_{SK}}{c_{p,S}} & 0 & \dfrac{1}{c_{p,S}} \end{bmatrix},$$

und mit dem Eingangsvektor

$$u_k = \begin{bmatrix} T_{K,k} \\ PV_{R,k} \\ PV_{S,k} \end{bmatrix}.$$

Auf der Basis des thermischen Modells gemäß Gleichung (3) wird erfindungsgemäß ein Kalmanfilter entworfen, das zur Ermittlung des zweiten Schätzwerts $T_{R2}$ für die Rotortemperatur dient.

Das erfindungsgemäß gebildete Kalmanfilter sieht zu einem Abtastzeitpunkt $t_k$ zunächst die Ausführung des Prädiktionsschritts gemäß

$$\hat{x}_{k+1}^- = A_d \, x_k^+ + B_d \, u_k$$

$$P_{k+1}^- = A_d \, P_k^+ \, A_k^T + Q$$

vor und anschließend den Korrekturschritt zur Auswertung der Messung gemäß

$$K_{k+1} = P_{k+1}^- H_R \left( H_R \, P_{k+1}^- \, H_R^T + R_M \right)^{-1}$$

$$\hat{x}_{k+1}^+ = \hat{x}_{k+1}^- + K_k \left( y_{k+1} - H_R \, \hat{x}_{k+1}^- \right)$$

$$P_{k+1}^+ = \left( I - K_{k+1} \, H_R \right) P_{k+1}^- ,$$

wobei

$$y_k = \begin{bmatrix} 0 & 1 \end{bmatrix} x_k$$

eine Messgröße im Sinne des Kalmanfilters bildet, und wobei zunächst

$$H_R = \begin{bmatrix} 0 & 1 \end{bmatrix} \qquad\qquad (\text{Gleichung 4a})$$

die Ausgangs- bzw. Messmatrix darstellt.

Die mit dem Prädiktionsschritt einhergehenden Berechnungen sind in Figur 1 durch den Funktionsblock 110 repräsentiert, und die mit dem Korrekturschritt einhergehenden Berechnungen sind in Figur 1 durch den Funktionsblock 120 repräsentiert. Der Funktionsblock 130 repräsentiert allgemein alle weiteren Berechnungen im Rahmen der erfindungsgemäßen Auswertung des thermischen Modells der Synchronmaschine 10.

Die Matrix Q, die Messfehlerkovarianzmatrix $R_M$ und ein Startwert für die Matrix P sind in dem Fachmann bekannter Weise geeignet zu wählen. Die Matrix I ist die Einheitsmatrix.

Der Zustandsvektor $\hat{x}_k^+$ am Ausgang des Funktionsblocks 120 beinhaltet den zweiten Schätzwert $T_{R2}$ für die Rotortemperatur zu dem Zeitpunkt $t_k$.

Durch die Wahl der Ausgangsmatrix gemäß Gleichung (4a) wird erreicht, dass bei der Auswertung des Kalmanfilters gemäß den vorstehend beschriebenen Prädiktions- und Korrekturschritten als Messgröße für den Kalmanfilter allein die Statortemperatur $T_{S,k}$ aus dem Vektor

$$x_k = \begin{bmatrix} T_{R2,k} \\ T_{S,k} \end{bmatrix}$$

verwendet wird. Dadurch ergibt sich vorteilhaft eine besonders einfache rechnerische Auswertung des Kalmanfilters, weil in dem Korrekturschritt des Kalmanfilters vorteilhaft auf eine Matrixinversion einer 2x2-Ausgangsmatrix verzichtet werden kann und nur die einfache Ausgangsmatrix $H_R = [0\ 1]$ in den Korrekturschritt des Kalmanfilters eingeht. Dadurch muss keine aufwendige Matrixinversion durchgeführt werden, sondern es ist nur eine Division durch eine skalare Größe erforderlich, um die Kaiman-Verstärkung gemäß

$$K_{k+1} = P_{k+1}^- H_R \left( H_R P_{k+1}^- H_R^T + R_M \right)^{-1}$$

zu ermitteln.

Der besondere Vorteil des erfindungsgemäßen Verfahrens liegt in der Kombination des vorstehend beschriebenen thermischen Modells mit dem anderweitig, d.h. aus dem Modell gemäß Gleichung (1a), (1b), ermittelten ersten Schätzwert $T_{R1}$.

Diese Kombination wird erfindungsgemäß vorteilhaft dadurch erreicht, dass zumindest zeitweise anstelle der Ausgangsmatrix

$$H_S = \begin{bmatrix} 0 & 1 \end{bmatrix}$$

die Ausgangsmatrix

$$H_R = \begin{bmatrix} 1 & 0 \end{bmatrix}$$

verwendet wird, was den Effekt hat, dass in einem Korrekturschritt des Kalmanfilters nunmehr allein der erste Schätzwert $T_{R1}$ für die Rotortemperatur in Form des zweiten Schätzwerts $T_{R2,k}$ aus dem Vektor

$$x_k = \begin{bmatrix} T_{R2,k} \\ T_{S,k} \end{bmatrix}$$

verwendet wird. D.h., für die erfindungsgemäße Auswertung des Kalmanfilters wird zur Übernahme des ersten Schätzwerts $T_{R1}$ des Schätzwertbildners 100 in den Kalmanfilter $T_{R2,k} = T_{R1}$ gewählt.

Bei der Größe $T_{R2,k}$ handelt es sich demnach erfindungsgemäß vorteilhaft um die zeitdiskrete Repräsentation des ersten Schätzwerts $T_{R1}$, wie er durch den Schätzwertbildner 100 ermittelt wird. Dadurch ist vorteilhaft die Möglichkeit gegeben, den zweiten Schätzwert $T_{R2}$ für die Rotortemperatur einerseits durch das Kalmanfilter in Abhängigkeit des thermischen Modells nach Gleichung (2a), (2b) und der Statortemperatur $T_S$ zu bilden. Andererseits kann der zweite Schätzwert $T_{R2}$ vorteilhaft durch Verwendung der Ausgangsmatrix

$$H_R = \begin{bmatrix} 1 & 0 \end{bmatrix}$$

verfeinert werden, indem der erste Schätzwert $T_{R1}$ in den Iterationsprozess des Kalmanfilters miteinbezogen wird.

Somit kann durch entsprechende Auswahl der Ausgangsmatrix H jeweils entweder der erste Schätzwert $T_{R1}$ oder die Statortemperatur $T_S$ für den Korrekturschritt des Kalmanfilters ausgewählt werden. Die Auswahl kann z.B. alternierend, nach einem anderen regelmäßigen Schema, das sich beispielsweise an das zeitliche Raster der Schätzwertbildung durch den Schätzwertbildner 100 anlehnt, oder auch zufällig erfolgen.

Die erfindungsgemäß vorgeschlagene ausschließliche Auswertung nur eines der beiden Werte $T_{R1}$, $T_S$ innerhalb einer Iteration des Kalmanfilters ermöglicht vorteilhaft die Verwendung einer einfacheren Ausgangsmatrix H, so dass anstelle einer Matrixinversion eine Division durch eine skalare Größe möglich ist.

Dennoch bietet das erfindungsgemäße Verfahren gegenüber dem herkömmlichen Ansatz eine gesteigerte Präzision, da beispielsweise alternierend in aufeinander folgenden Iterationen beide Werte $T_{R1}$, $T_S$ für den Korrekturschritt des Kalmanfilters verwendbar sind und somit beide Werte $T_{R1}$, $T_S$ zur Verfeinerung des mittels des Kalmanfilters erhaltenen zweiten Schätzwerts $T_{R2}$ beitragen.

Der zweite Schätzwert $T_{R2}$ repräsentiert daher den erfindungsgemäß ermittelten Wert für die Rotortemperatur, der Untersuchungen der Anmelderin zufolge besser mit dem tatsächlichen Wert der Rotortemperatur übereinstimmt als konventionell ermittelte Werte.

Die beiden Werte $T_{R1}$, $T_S$ können wie bereits beschrieben anstelle einer alternierenden Verwendung beispielsweise auch in unregelmäßiger Folge verwendet werden. Es kann z.B. immer dann, wenn ein neuer erster Schätzwert $T_{R1}$ vorliegt der erste Schätzwert $T_{R1}$ von dem Kalmanfilter verwendet werden, und ansonsten wird das Kalmanfilter mit der Statortemperatur $T_S$ ausgewertet.

Figur 2 zeigt die erfindungsgemäße zeitliche Abfolge der Auswertung des Kalmanfilters, wobei zunächst ein erster Prädiktionsschritt p0 (Zeitindex k=0) gemäß den Gleichungen

$$\hat{x}^-_{k+1} = A_d\, \hat{x}^+_k + B_d\, u_k$$

$$P^-_{k+1} = A_d\, P^+_k\, A^T_k + Q$$

durchgeführt wird. Auf den ersten Prädiktionsschritt p0 folgt der erste Korrekturschritt k0 gemäß den Gleichungen

$$K_{k+1} = P^-_{k+1}\, H_R \left( H_R\, P^-_{k+1}\, H^T_R + R_M \right)^{-1}$$

$$\hat{x}^+_{k+1} = \hat{x}^-_{k+1} + K_k \left( y_{k+1} - H_R\, \hat{x}^-_{k+1} \right)$$

$$P^+_{k+1} = \left( I - K_{k+1}\, H_R \right) P^-_{k+1} ,$$

Diese erste Iteration p0, k0 des Kalmanfilters erfolgt beispielhaft unter Verwendung einer Ausgangsmatrix vom Typ $H_R = [0\ 1]$, ebenso wie die nachfolgende zweite Iteration p1, k1.

Zu dem Zeitpunkt t0 jedoch ist ein neuer erster Schätzwert $T_{R1}$ des Schätzwertbildners 100 verfügbar, vergleiche den Pfeil in Figur 2, so dass die nachfolgende dritte Iteration des Kalmanfilters mit einer anderen Ausgangsmatrix vom Typ $H_S = [1\ 0]$ durchgeführt wird, um den am Ausgang des Kalmanfilters vorliegenden zweiten Schätzwert $T_{R2}$ vermöge des neu gebildeten ersten Schätzwerts $T_{R1}$ zu verfeinern.

Danach wird in der vierten und den nachfolgenden Iterationen p3, k3, .. des Kalmanfilters wiederum die Ausgangsmatrix vom Typ $H_R$ = [0 1] verwendet, beispielsweise so lange, bis wieder ein neuer erster Schätzwert $T_{R1}$ vorliegt.

Falls sich die Fehlerkovarianzmatrix P bei einer konstanten Drehzahl N der Synchronmaschine schnell auf einen stationären Wert einschwingt kann das Einschwingverhalten vernachlässigt werden, und es kann stets mit der stationären Matrix P gearbeitet werden, so dass nicht ständig eine Neuberechnung, z.B. in dem Steuergerät 20 erforderlich ist. Die Elemente der Matrix P können in diesem Fall jeweils als drehzahlabhängige Kennlinien gespeichert werden.

Bei einer weiteren Ausführungsform der Erfindung, die eine besonders präzise Ermittlung der Rotortemperatur ermöglicht, wird eine dritte Form für die Ausgangsmatrix gewählt:

$$H_{RS} = \begin{bmatrix} 1 & 0 \\ 0 & 1 \end{bmatrix}$$

Diese Ausgangsmatrix $H_{RS}$ ermöglicht eine gleichzeitige Berücksichtigung beider im Sinne des Kalmanfilters als "Messwerte" verwendeten Werte $T_{R2,k}$, $T_{S,k}$ des Vektors $x_k = \begin{bmatrix} T_{R2,k} \\ T_{S,k} \end{bmatrix}$ innerhalb einer Iteration des Kalmanfilters, erfordert dementsprechend jedoch einen erhöhten Rechenaufwand, weil eine Matrixinversion zur Bildung der Kalman-Verstärkung

$$K_{k+1} = P_{k+1}^- H_R \left( H_R P_{k+1}^- H_R^T + R_M \right)^{-1}$$

durchzuführen ist.

Das erfindungsgemäße Verfahren ermöglicht insgesamt eine zuverlässige und präzise Ermittlung der Rotortemperatur der Synchronmaschine 10 und bietet insbesondere eine größere Genauigkeit als solche Verfahren, die nur auf einer Auswertung elektrischer Betriebsgrößen der Synchronmaschine 10 beruhen.

Das erfindungsgemäße Verfahren wird bevorzugt ausgeführt durch das Steuergerät 20.

**Patentansprüche**

1. Verfahren zur Ermittlung der Rotortemperatur einer permanenterregten Synchronmaschine (10), bei dem ein erster Schätzwert ($T_{R1}$) für die Rotortemperatur in Abhängigkeit einer Remanenzflussdichte von in einem Rotor der Synchronmaschine (10) enthaltenen Permanentmagneten ermittelt wird, wobei ein zweiter Schätzwert ($T_{R2}$) für die Rotortemperatur mittels eines ein thermisches Modell der Synchronmaschine (10) enthaltenden Kalmanfilters ermittelt wird, dem zumindest zeitweise der erste Schätzwert ($T_{R1}$) für die Rotortemperatur zugeführt wird, **dadurch gekennzeichnet, dass** dem Kalmanfilter, insbesondere für einen Korrekturschritt, alternierend in aufeinander folgenden Iterationen oder in unregelmäßiger Folge der erste Schätzwert ($T_{R1}$) für die Rotortemperatur oder ein Messwert ($T_S$) für die Statortemperatur zugeführt wird.

2. Verfahren nach Anspruch 1, **dadurch gekennzeichnet, dass** dem Kalmanfilter, insbesondere für einen Korrekturschritt, sowohl der erste Schätzwert ($T_{R1}$) für die Rotortemperatur als auch ein Messwert ($T_S$) für die Statortemperatur zugeführt wird.

3. Verfahren nach einem der vorstehenden Ansprüche, **dadurch gekennzeichnet, dass** das thermische Modell der Synchronmaschine (10) mindestens die Komponenten Stator, Rotor und Kühlwasser aufweist, wobei Wärmeübergänge vorzugsweise zwischen allen Komponenten berücksichtigt werden.

4. Verfahren nach einem der vorstehenden Ansprüche, **dadurch gekennzeichnet, dass** das thermische Modell von einer Drehzahl (N) der Synchronmaschine (10) abhängige Wärmeleitwerte zwischen seinen bzw. den Komponenten verwendet.

5. Verfahren nach einem der vorstehenden Ansprüche, **dadurch gekennzeichnet, dass** das thermische Modell Wärmeverluste an einem Stator und einem Rotor der Synchronmaschine (10) berücksichtigt, wobei bevorzugt eine Abhängigkeit der Wärmeverluste von der Rotortemperatur vernachlässigt wird.

6. Verfahren nach einem der vorstehenden Ansprüche, **dadurch gekennzeichnet, dass** zur Ermittlung des ersten Schätzwerts ($T_{R1}$) für die Rotortemperatur ein stationäres Modell der Synchronmaschine (10) verwendet wird gemäß

$$U_d = R \cdot I_d - L_q \cdot I_q \cdot \omega,$$

$$U_q = R \cdot I_q + L_d \cdot I_d \cdot \omega + K_m \cdot \omega,$$

wobei $U_d$, $U_q$ die Spannung der Synchronmaschine (10) in d- bzw. q-Richtung bezeichnet,
wobei $I_d$, Iq den Strom der Synchronmaschine (10) in d- bzw. q-Richtung bezeichnet und $L_d$, Lq die entsprechenden Induktivitäten, wobei R ein Strangwiderstand ist, wobei $\omega$ die elektrische Winkelgeschwindigkeit ist, und wobei $K_m$ eine temperaturabhängige Grundwellenamplitude des Polradflusses ist.

7. Verfahren nach Anspruch 6, **dadurch gekennzeichnet, dass** die Synchronmaschine (10) zur Ermittlung des ersten Schätzwerts ($T_{R1}$) für die Rotortemperatur zeitweise in einen Betriebspunkt versetzt wird, in dem keine Sättigung herrscht.

8. Verfahren nach einem der Ansprüche 6 bis 7, **dadurch gekennzeichnet, dass** die Induktivitäten $L_d$, $L_q$ und die Grundwellenamplitude des Polradflusses $K_m$ jeweils in Abhängigkeit der Ströme $I_d$, $I_q$ ermittelt werden, vorzugsweise unter Verwendung von Kennfeldern.

9. Verfahren nach einem der Ansprüche 6 bis 8, **dadurch gekennzeichnet, dass** der erste Schätzwert ($T_{R1}$) für die Rotortemperatur gemäß der Gleichung

$$T_{R1} = T_{R0} + \frac{K_m(T_{R1}) - K_{m0}}{\alpha \cdot K_{m0}}$$

erhalten wird, wobei $\alpha$ der Temperaturkoeffizient der Remanenzflussdichte ist, wobei $K_{m0}$ ein Referenzwert der Remanenzflussdichte bei der Referenztemperatur $T_{R0}$ ist, und wobei gilt:

$$K_m(T_{R1}) = \frac{U_q - R \cdot I_q}{\omega} - L_d(I_d) \cdot I_d.$$

10. Vorrichtung (20) konfiguriert zur Ermittlung der Rotortemperatur einer permanenterregten Synchronmaschine (10) nach dem Verfahren eines der vorhergehenden Ansprüche.

**Claims**

1. Method for determining the rotor temperature of a permanently excited synchronous machine (10), in which a first estimated value ($T_{R1}$) for the rotor temperature is determined in dependence on a remanent flux density of permanent magnets contained in a rotor of the synchronous machine (10), wherein a second estimated value ($T_{R2}$) for the rotor temperature is determined by means of a Kalman filter containing a thermal model of the synchronous machine (10), to which the first estimated value ($T_{R1}$) for the rotor temperature is at least intermittently supplied, **characterized in that** the first estimated value ($T_{R1}$) for the rotor temperature or a measured value ($T_S$) for the stator temperature is supplied to the Kalman filter, in particular for a correction step, alternately in successive iterations or in irregular sequence.

2. Method according to Claim 1, **characterized in that** both the first estimated value ($T_{R1}$) for the rotor temperature and a measured value ($T_S$) for the stator temperature are supplied to the Kalman filter, in particular for a correction step.

3. Method according to one of the preceding claims, **characterized in that** the thermal model of the synchronous machine (10) comprises at least the components stator, rotor and cooling water, wherein allowance is made for heat transfers, preferably between all of the components.

4. Method according to one of the preceding claims, **characterized in that** the thermal model uses values dependent on a rotational speed (N) of the synchronous machine (10) for the thermal conductance between its or the components.

5. Method according to one of the preceding claims, **characterized in that** the thermal model makes allowance for heat losses at a stator and a rotor of the synchronous machine (10), a dependence of the heat losses on the rotor temperature preferably being disregarded.

6. Method according to one of the preceding claims, **characterized in that** a steady-state model of the synchronous machine (10) is used for the determination of the first estimated value ($T_{R1}$) for the rotor temperature according to:

$$\mathrm{U}_{\mathrm{d}} = \mathrm{R} \cdot \mathrm{I}_{\mathrm{d}} - \mathrm{L}_{\mathrm{q}} \cdot \mathrm{I}_{\mathrm{q}} \cdot \omega,$$

$$U_q = R \cdot I_q + L_d \cdot I_d \cdot \omega + K_m \cdot \omega,$$

where $U_d$, Uq denote the voltage of the synchronous machine (10) in the d direction and q direction, respectively, $I_d$, Iq denote the current of the synchronous machine (10) in the d direction and q direction, respectively, and $L_d$, Lq denote the corresponding inductances, where R is a strand resistance, $\omega$ is the electrical angular velocity and $K_m$ is a temperature-dependent fundamental-wave amplitude of the field-linked direct-axis flux.

7. Method according to Claim 6, **characterized in that**, for the determination of the first estimated value ($T_{R1}$) for the rotor temperature, the synchronous machine (10) is operated for a time at an operating point at which no saturation prevails.

8. Method according to either of Claims 6 and 7, **characterized in that** the inductances $L_a$, Lq and the fundamental-wave amplitude of the field-linked direct-axis flux $K_m$ are respectively determined in dependence on the currents $I_d$, $I_q$, preferably using characteristics maps.

9. Method according to one of Claims 6 to 8, **characterized in that** the first estimated value ($T_{R1}$) for the rotor temperature is obtained according to the equation

$$\mathrm{T}_{\mathrm{R1}} = \mathrm{T}_{\mathrm{R0}} + \frac{\mathrm{K}_{\mathrm{m}}\left(\mathrm{T}_{\mathrm{R1}}\right) - \mathrm{K}_{\mathrm{m0}}}{\alpha \cdot \mathrm{K}_{\mathrm{m0}}}$$

where $\alpha$ is the temperature coefficient of the remanent flux density, $K_{m0}$ is a reference value of the remanent flux density at the reference temperature $T_{R0}$, and:

$$\mathrm{K}_{\mathrm{m}}\left(\mathrm{T}_{\mathrm{R1}}\right) = \frac{\mathrm{U}_{\mathrm{q}} - \mathrm{R} \cdot \mathrm{I}_{\mathrm{q}}}{\omega} - \mathrm{L}_{\mathrm{d}}\left(\mathrm{I}_{\mathrm{d}}\right) \cdot \mathrm{I}_{\mathrm{d}}.$$

10. Device (20) configured for determining the rotor temperature of a permanently excited synchronous machine (10) by the method of one of the preceding claims.

**Revendications**

1. Procédé de détermination de la température de rotor d'une machine synchrone (10) à excitation permanente, selon lequel une première valeur estimée ($T_{R1}$) de la température du rotor est déterminée en fonction d'une densité de flux rémanente d'aimants permanents se trouvant dans un rotor de la machine synchrone (10), une deuxième valeur estimée ($T_{R2}$) de la température du rotor étant déterminée au moyen d'un filtre de Kalman contenant un modèle thermique de la machine synchrone (10) et auquel est acheminée au moins périodiquement la première valeur estimée ($T_{R1}$) de la température du rotor, **caractérisé en ce que** la première valeur estimée ($T_{R1}$) de la température du rotor ou une valeur mesurée (Ts) de la température du stator est acheminée au filtre de Kalman en alternance dans des itérations successives ou dans une séquence irrégulière, notamment pour une étape de correction.

2. Procédé selon la revendication 1, **caractérisé en ce que** la première valeur estimée ($T_{R1}$) de la température du rotor ainsi qu'une valeur mesurée (Ts) de la température du stator sont toutes deux acheminées au filtre de Kalman, notamment pour une étape de correction.

3. Procédé selon l'une des revendications précédentes, **caractérisé en ce que** le modèle thermique de la machine synchrone (10) possède au moins les composants stator, rotor et eau de refroidissement, les transferts thermiques de préférence entre tous les composants étant pris en compte.

4. Procédé selon l'une des revendications précédentes, **caractérisé en ce que** le modèle thermique utilise des conductances thermiques dépendantes d'une vitesse de rotation (N) de la machine synchrone (10) entre ses ou les composants.

5. Procédé selon l'une des revendications précédentes, **caractérisé en ce que** le modèle thermique tient compte des pertes thermiques au niveau d'un stator et d'un rotor de la machine synchrone (10), une dépendance des pertes thermiques à la température du rotor étant de préférence ignoré.

6. Procédé selon l'une des revendications précédentes, **caractérisé en ce qu'**un module stationnaire de la machine synchrone (10) selon

$$U_d = R \cdot I_d - L_q \cdot I_q \cdot \omega,$$

$$U_q = R \cdot I_q + L_d \cdot I_d \cdot \omega + K_m \cdot \omega,$$

est utilisé pour la détermination de la première valeur estimée ($T_{R1}$) de la température du rotor, $U_d$, Uq désignant la tension de la machine synchrone (10) dans la direction d ou q,

$I_d$, Iq désignant le courant de la machine synchrone (10) dans la direction d ou q et
$L_d$, Lq désignant les inductances correspondantes, R une résistance d'enroulement, $\omega$ la vitesse angulaire électrique et $K_m$ une amplitude d'onde fondamentale dépendante de la température du flux du rotor.

7. Procédé selon la revendication 6, **caractérisé en ce que** la machine synchrone (10), en vue de la détermination de la première valeur estimée ($T_{R1}$) de la température du rotor, est amenée périodiquement dans un point de fonctionnement dans lequel ne règne aucune saturation.

8. Procédé selon l'une des revendications 6 à 7, **caractérisé en ce que** les inductances $L_d$, Lq et l'amplitude d'onde fondamentale du flux du rotor $K_m$ sont respectivement déterminées en fonction des courants $I_d$, Iq, de préférence en utilisant des diagrammes caractéristiques.

9. Procédé selon l'une des revendications 6 à 8, **caractérisé en ce que** la première valeur estimée ($T_{R1}$) de la température du rotor est obtenue conformément à l'équation

$$T_{R1} = T_{R0} + \frac{K_m(T_{R1}) - K_{m0}}{\alpha \cdot K_{m0}},$$

$\alpha$ désignant le coefficient de température de la densité de flux rémanente, $K_{m0}$ une valeur de référence de la densité de flux rémanente à la température de référence $T_0$ et avec : $K_m(T_{R1}) = \frac{U_q - R \cdot I_q}{\omega} - L_d(I_d) \cdot I_d.$

**10.** Dispositif (20) configuré pour déterminer la température de rotor d'une machine synchrone (10) à excitation permanente d'après le procédé selon l'une des revendications précédentes.

**Fig. 1**

**Fig. 2**

**IN DER BESCHREIBUNG AUFGEFÜHRTE DOKUMENTE**

**In der Beschreibung aufgeführte Patentdokumente**

- DE 10254295 A1

**In der Beschreibung aufgeführte Nicht-Patentliteratur**

- **PEYMAN MILANFAR.** Monitoring the thermal condition of permanent-magnet synchronous motors. *IEEE Transactions on aerospace and electronic systems,* 01. Oktober 1996, vol. 32 (4), 1421-1429